# EUROPÄISCHE PATENTANMELDUNG

(11) **EP 1 329 915 A1**
(43) Veröffentlichungstag der Anmeldung: **23.07.2003**
(21) Anmeldenummer: 02001406.4
(22) Anmeldetag: 21.01.2002
(51) Int. Cl.: H01G 4/232, H01G 4/228

(54) **Kondensator sowie Verfahren zu dessen Herstellung**

(71) Anmelder: ABB RESEARCH LTD., 8050 Zürich (CH)
(72) Erfinder: Carlen, Martin, 5443 Niederrohrdorf (CH); Ohler, Christian, 5400 Baden (CH)
(74) Vertreter: ABB Patent Attorneys

(57) **Zusammenfassung**

Der Kondensator zeichnet sich im Wesentlichen dadurch aus, dass ein Element aus Metallschaum (9) zur Kontaktierung der Kondensator-Elektroden verwendet wird. Hierzu liegt das Metallschaumelement (9) an einer Kontaktfläche der zu kontaktierenden Elektrode an. Die Kontaktfläche kann bspw. eine flammgespritzte Schicht (8) aufweisen.

Das heikle direkte Löten einer Sammelelektrode an die Elektroden entfällt. Gegebenenfalls kann eine Sammelelektrode (10) aber an das Metallschaumelement angelötet werden.

## Beschreibung

### Technisches Gebiet

Die Erfindung bezieht sich auf einen Kondensator und ein Verfahren zur Herstellung eines Kondensators. Im speziellen bezieht sie sich auf ein Verfahren zum Kontaktieren von Folienkondensatoren und auf mit diesem Verfahren hergestellte Kondensatoren.

### Stand der Technik

Folienkondensatoren werden hergestellt, indem Wickel oder Stapel vieler Schichten aus abwechslungsweise dielektrischem Material und elektrisch leitfähigem Material gebildet werden. Das dielektrische Material ist dabei eine Polymerfolie oder besteht aus Papier. Das elektrisch leitende Material ist eine metallische Folie oder eine metallische Beschichtung auf der Polymerfolie und dient als Elektrode. Die Elektroden werden so angeordnet bzw. angebracht, dass in Filmrichtung einer der beiden Randbereiche der dielektrischen Folie nicht durch die leitende Schicht bedeckt ist. Die andere Seite wird elektrisch kontaktiert. Die Seite, auf der der Randbereich nicht durch die leitende Schicht bedeckt ist und die Leiterschicht nicht an die Kontaktierung herangeführt ist, wechselt von Lage zu Lage ab, so dass aufeinander folgende Schichten von der jeweils gegenüberliegenden Seite her kontaktiert werden. Durch Anlegen einer elektrischen Spannung zwischen den beiden gegenüberliegenden Seiten wird der Kondensator aufgeladen. Ein Beispiel für einen Folienkondensator dieser Art ist in der Deutschen Offenlegungsschrift DE 198 56 457 A gezeigt.

Gewickelte Folienkondensatoren können zylindrisch und im Querschnitt rund oder flach sein.

Gemäss dem Stand der Technik werden die Elektroden durch eine flammgespritzte metallische Schicht kontaktiert. Auf die flammgespritzte Schicht, wird ein Draht oder eine Sammelelektrode gelötet. Der Draht oder die Sammelelektrode wird entweder zur Verbindung mit den Kondensatorpolen und weiteren elektrisch parallel geschalteten Kondensatorelementen oder zur seriellen Verbindung mit einem weiteren Kondensatorelement einer Serieschaltung von Kondensatorelementen benutzt. Das Lötzinn bedeckt normalerweise nur einen Teil der flammgespritzten Fläche. Das Anlöten der Sammelelektrode ist ein heikler Prozess, welcher nur durch gut ausgebildetes Fachpersonal ausgeführt werden kann, weil die dielektrische Folie leicht Schaden durch Überhitzung nimmt. Die Kondensatorelemente können am Schluss mit einer dielektrischen Flüssigkeit oder einem Gas imprägniert werden.

### Darstellung der Erfindung

Es ist Aufgabe der vorliegenden Erfindung, einen Kondensator und ein Verfahren zur Herstellung eines Kondensators zur Verfügung zu stellen, welche Nachteile von bestehenden Kondensatoren und Herstellungsverfahren überwinden und welche insbesondere eine einfachere und weniger heikle Kontaktierung der Elektroden ermöglichen.

Diese Aufgabe wird durch die Erfindung gelöst, wie sie in den unabhängigen Patentansprüchen definiert ist.

Vorteilhafte Ausgestaltungen des Kondensators und des Herstellungsverfahrens gehen aus den abhängigen Ansprüchen hervor.

Der Kondensator zeichnet sich im Wesentlichen dadurch aus, dass ein Element aus Metallschaum zur Kontaktierung von Kondensatorelektroden verwendet wird. Hierzu liegt das Metallschaumelement an einer Kontaktfläche der zu kontaktierenden Elektrode an. Die Kontaktfläche kann bspw. eine flammgespritzte Schicht aufweisen.

Das heikle direkte Löten einer Sammelelektrode an die Elektroden entfällt. Gegebenenfalls kann eine Sammelelektrode aber an das Metallschaumelement angelötet werden.

Dieses Vorgehen bringt mehrere Vorteile:
- Es muss keine Sammelelektrode als stromzuführendes bzw. -abführendes Element an eine Kontaktfläche der Elektroden gelötet werden. Somit wird das Risiko vermieden, dass die dielektrischen Folien aufgrund zu grosser Wärmeeinwirkung beim Löten beschädigt werden.
- Das Anbringen des Metallschaumelementes ist sehr einfach und rationell zu bewerkstelligen. Es muss lediglich an die entsprechende Kontaktfläche angelegt werden. Das eventuelle Anlöten einer Sammelelektrode an das Metallschaumelement kann maschinell geschehen.
- Das Metallschaumelement kann so ausgebildet sein, dass es im wesentlichen die ganze Kontaktfläche bedeckt. Das ist von Vorteil, weil damit ein Kontaktwiderstand erwirkt werden kann, welcher gleich gross oder gar kleiner ist als derjenige eines gelöteten Kontaktes.
- Ein direktes Anlöten einer Sammelelektrode kann zu Spannungen und schliesslich zu Sprüngen in der flammgespritzen Schicht und/oder in der Elektrode führen. Die flexible Struktur des Metallschaums beseitigt dieses Problem.
- Es gibt Kondensatoren, welche Kondensatorelemente besitzen, welche aus mehreren nebeneinander angeordneten, parallel geschalteten Kondensator-Grundelementen aufgebaut sind. Die Parallelschaltung dieser Kondensator-Grundelemente erfolgt bspw. durch die gleichzeitige Herstellung einer flammgespritzten Schicht für die nebeneinander liegenden Kondensator-Grundelemente. Bei der Herstellung dieser flammgespritzten Schicht kann diese aber zwischen den Kondensator-Grundelementen aufbrechen. Dadurch entsteht ein grosser elektrischer Widerstand zwischen den Kondensator-Grundelementen. Das Metallschaumelement kontaktiert gleichzeitig die ganze Kontaktfläche aller Kondensator-Grundelemente und kann damit Sprünge in der flammgespritzten Schicht überbrücken.
- Im Herstellungsverfahren kann es Dickenunterschiede in der flammgesprizten Schicht geben, oder es kann eine ungleichmässige mechanische Druckverteilung auftreten. Die Flexibilität des Metallschaums ermöglicht, dass hohe Drücke aufgefangen werden und dass ein konstanter, gleichmässiger Druck auf die ganze Fläche ausgeübt wird. Die dielektrischen Folien werden auch an den Kontaktstellen nicht beschädigt.
- Das Metallschaumelement kann alle möglichen Formen aufweisen. Es kann dadurch für Kondensatoren mit runden oder flachen Wickel oder für gestapelte Kondensatorelemente gleichermassen verwendet werden.
- Metallschaum wird industriell gefertigt und ist in grossen Mengen erhältlich.
- Gas oder Öl kann problemlos in die offenporigen Strukturen des Metallschaumelementes eindringen. Dadurch bestehen keine Nachteile beim Trocknen, Evakuieren und Imprägnieren der Kondensatorelemente. Im Vergleich zu Kondensatoren mit dichten Lötkontakten ergibt sich sogar eine Verbesserung dieser Eigenschaft.

Gemäss einer bevorzugten Ausführungsform ist der erfindungsgemässe Kondensator zusammengesetzt aus einem Stapel von untereinander in Serie geschalteten Kondensatorelementen, wobei zwischen je zwei Kondensatorelementen ein Metallschaumelement angeordnet ist. Im Vergleich zu bestehenden Kondensatoren, welche aus einem Stapel von Metallschaumelementen zusammengesetzt sind, wird der Herstellungsprozess vereinfacht, und die Anfälligkeit auf fehlerhafte Kontaktierungen etc. ist geringer.

Gemäss einer weiteren bevorzugten Ausführungsform werden, wie bereits ausgeführt, die Elektroden mit einer flammgespritzten Schicht versehen, welche ihrerseits durch das Metallschaumelement kontaktiert werden, wobei gegebenenfalls eine weitere Kontaktschicht, bspw. in Form einer leitenden Paste, dazwischengeschaltet wird.

Gemäss einer dazu alternativen Ausführungsform sind die Elektroden aus einem elastisch oder plastisch leicht verformbaren Material gefertigt und/oder als Metallfolie ausgebildet und können eventuell auf der einen Randseite über das Dielektrikum hinausragen. Das Metallschaumelement wird direkt auf die Elektroden gelegt, ohne dass eine flammgespritzte Schicht notwendig wäre. Auf diese Weise wird der Herstellungsprozess des Kondensators noch ökonomischer und einfacher.

### Kurze Beschreibung der Zeichnungen

Im Folgenden wird die Erfindung anhand von Ausführungsbeispielen und mit Bezug auf sehr schematische Zeichnungen noch näher erläutert. In den Zeichnungen zeigen:
- Fig. 1 eine schematische Explosionsdarstellung eines gewickelten zylindrischen metallisierten Folienkondensatorwickels mit Metallschaumelementen, und
- Fig. 2 eine schematische Explosionsdarstellung eines Kondensators, welcher aus 2 in Serie geschalteten Kondensatorelementen zusammengesetzt ist, die aus einem Stapel parallel geschalteter Kondensatorwickel bestehen.

### Wege zur Ausführung der Erfindung

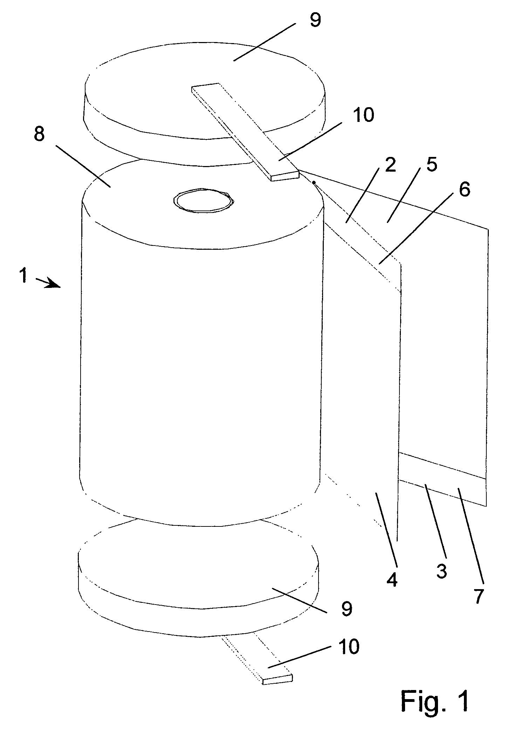

In der **Figur 1** ist ein rotationssymmetrisch zylindrischer Folienkondensator 1 gezeigt. Der hier gezeigte Folienkondensator 1 ist aus zwei je einseitig mit einer elektrisch leitenden Beschichtung 4, 5 versehenen dielektrischen Folien 2, 3 gewickelt. Durch die Form der Wicklung werden eine Wicklungsachse, eine Mantelfläche und eine obere und eine untere Stirnfläche definiert. Aus Gründen der übersichtlichen Darstellung ist ein Teilstück der Folien 2, 3 als nicht aufgewickelt gezeichnet. Die Folien bestehen aus einem Kunststoff, bspw. einem Polymer wie Polyethylen, Polystyrol, Polypropylen, Polykarbonat, PET, PEN, Celluloseacetat, Polyester, einem Epoxydharz, einem Polysulfon, oder einem anderen Kunststoff oder aus Papier und sind bspw. ca. 2-30 µm dünn. Die darauf aufgebrachten leitenden Beschichtungen 4, 5 sind als Metallschichten oder als leitende Kunststoffschichten ausgebildet. Die Beschichtungen dienen als Kondensatorelektroden. Jede der beiden leitenden Beschichtungen 4, 5 bedeckt jeweils die dielektrische Folie nicht vollständig, so dass die Folie in einem Randbereich 6, 7 nicht durch die leitende Schicht bedeckt ist. Diese Randbereiche 6, 7 sind an einander gegenüberliegenden Stirnseiten angeordnet. Die jeweils bis ganz nach aussen an die Stirnseite geführte Beschichtung kann von der oberen bzw. unteren Stirnseite her elektrisch kontaktiert werden, während das Freihalten der Randbereiche 6, 7 dazu dient, dass die jeweils andere Beschichtung sicher keinen elektrischen Kontakt zu stimseitig angebrachten Kontaktmitteln haben. Durch Anlegen einer Spannung zwischen stirnseitig angebrachten Kontaktmitteln können die beiden Beschichtungen 4, 5 gegeneinander aufgeladen werden.

Alternativ zum hier gezeichneten einfachsten Aufbau kann der Kondensator natürlich auch aus mehr als zwei Folien gewickelt sein. Er kann auch eine interne Serieschaltung aufweisen. Solche interne Serieschaltungen sind an sich bekannt und können bspw. bewirkt werden, indem die Beschichtungen zueinander versetzte Lücken besitzen. Die Elektroden können durch Metallfolien gebildet sein, welche an die Stelle der Beschichtungen treten.

Die Stirnflächen sind je mit einer flammgespritzten Schicht 8 versehen. Eine solche kann bspw. aus Zn, Sn, einer Metalllegierung oder irgend einem anderen geeigneten leitenden Material bestehen und in an sich bekannter Art aufgebracht worden sein. Die flammgespritze Schicht 8 auf der Stirnfläche bildet eine Kontaktfläche der jeweiligen Elektrode. An jeder Kontaktfläche liegt ein - in der Explosionsdarstellung beabstandet gezeichnetes - Metallschaumelement 9 an. Dieses ist aus einem geschlossen- oder offenporig vorliegendem metallischen Material gefertigt, und besteht bspw. im Wesentlichen aus einer Ni-, oder Al- Legierung oder irgend einer anderen metallischen Legierung. Durch leichtes Andrücken des Metallschaumelementes 9 an die entsprechende Kontaktfläche wird diese kontaktiert. Das Metallschaumelement 9 ist scheibenförmig und so ausgebildet, dass es im Wesentlichen die gesamte Kontaktfläche bedecken kann, bspw. indem seine Abmessungen denjenigen der Kontaktfläche entsprechen.

Zwischen der Kontaktfläche und dem Metallschaumelement 9 kann optional noch eine Schicht aus einer leitenden Paste vorliegen.

Alternativ dazu können die Stirnflächen auch frei von einer flammgespritzten Schicht sein. Das Metallschaumelement liegt dann direkt auf der Stirnfläche auf, welche in dem Fall als Kontaktfläche dient. Diese Alternative wird insbesondere dann gewählt, wenn das Metallschaumelement relativ weich und/oder das Material der Elektroden elastisch ist oder aus einer Metallfolie besteht.

Es kann auch direkt auf der Stirnfläche eine Schicht aus einer leitenden Paste aufgebracht sein, auf der dann das Metallschaumelement aufliegt. Weitere gegenseitige Anordnungen von Elektroden, leitenden Schichten und Metallschaumelement sind denkbar.

Die Metallschaumelemente 9 sind mit je einer Sammelektrode 10 verbunden. Diese sind bspw. maschinell an das Metallschaumelement 9 angelötet oder durch eine leitende und klebende Paste an diesem befestigt. Die Sammelektroden 10 ihrerseits sind bspw. mit Polen des Kondensators verbunden oder bilden diese Pole.

Die in der Zeichnung dargestellten Elemente sind bspw. noch von einem nicht gezeichneten Gehäuse umgeben, durch welches auch bewirkt wird, dass die Metallschaumelemente mit konstantem Druck an die Kontaktflächen angedrückt werden.

Wie vorstehend bereits dargelegt kann durch das Metallschaumelement verhindert werden, dass ein stromzuführendes bzw. stromabnehmendes Element an die Kontaktfläche angelötet werden muss. Obwohl nicht gelötet wird, ist der Kontaktwiderstand nicht massiv grösser als derjenige einer Lötstelle, und je nach dem sogar kleiner. Der Kontaktflächenwiderstand beträgt bspw. für einen Metallschaum auf einer mit Zn flammgespritzten Fläche ungefähr 0,02 Ωcm² und 0,01 Ωcm² auf Aluminiumfolie. Generell kann der Kontaktflächenwiderstand zwischen ungefähr 0,001 Ωcm² und 0,1 Ωcm² variieren. Indem feinporiges Material für das Metallschaumelement und weiches metallisches Material für die flammgespritzte Lage verwendet werden, kann der Kontaktwiderstand sogar noch weiter verringert werden. Eine zusätzliche Verringerung des Kontaktwiderstands wird erreicht, indem wie bereits dargelegt eine dünne Schicht einer leitenden Paste zwischen das Metallschaumelement und die Kontaktfläche gebracht wird. Die verformbare und schaumige Struktur des Metallschaumelementes ermöglicht viele lokale Kontaktpunkte mit einem in der Summe kleinen Kontaktwiderstand.

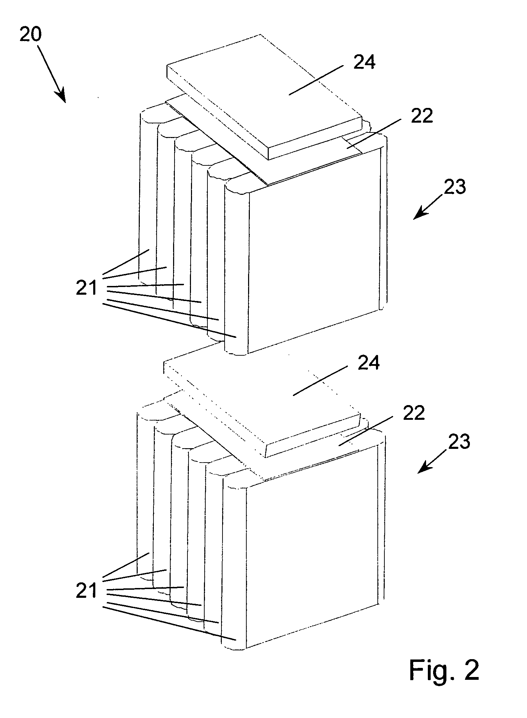

In der **Figur 2** sind noch Ausschnitte eines aus mehreren Kondensatorelementen zusammengesetzten Kondensators 20 in einer Explosionsdarstellung abgebildet. Der Kondensator besitzt mehrere aus metallisierten Folien bestehende Wickel, welche zusammen mit einer den Mantel umgebenden Schutzschicht hier Kondensator-Grundelemente 21 genannt werden. Die Kondensator-Grundelemente 21 sind im Unterschied zum vorstehend beschriebenen Kondensator 1 nicht rotationssymmetrisch, sondern flach. Trotzdem wird durch die Wicklungen eine Achse definiert. Mehrere Kondensator-Grundelemente 21 sind nebeneinander angeordnet und durch je eine über die Stirnflächen auf beiden Seiten verlaufende flammgespritzte Schicht 22 elektrisch parallel geschaltet. Eine Gruppe von parallel geschalteten Kondensator-Grundelementen 21 bildet zusammen ein Kondensatorelement 23, aus welchem durch Serieschaltung mit weiteren Kondensatorelementen 23 der Kondensator 20 gebildet wird. Für eine Serieschaltung müssen die Kondensatorelemente 23 lediglich aufeinander gestapelt und die entsprechenden Kontaktflächen miteinander in Kontakt gebracht werden. Dazu wird zwischen je zwei Kondensatorelementen 23 ein Metallschaumelement 24 angeordnet. Zusätzlich können - optional - auch die in der Serieschaltung äussersten Kondensatorelemente 23 in der Anhand der Figur 1 beschriebenen Art durch Metallschaumelemente 24 elektrisch kontaktiert sein.

Durch Serieschaltung einer Vielzahl von Kondensatorelementen kann ein Kondensator für Mittel- oder gar Hochspannungsanwendungen konzipiert werden.

Es ist natürlich auch möglich, einzelne Kondensator-Grundelemente direkt in Serie zu schalten, wobei diese Grundelemente dann in der hier gewählten Terminologie, eventuell zusammen mit einer flammgespritzten Schicht, Kondensatorelemente bilden.

Alternativ dazu kann ein Kondensator natürlich auch aus mehreren parallel geschalteten Kondensator-Grundelementen ohne Serieschaltung gebildet werden.

Die elektrische Kontaktierung von Elektroden durch Metallschaumelemente ist nicht nur für gewickelte Folienkondensatoren von Interesse. So kann bspw. ein Metallschaumelement auch an eine flächig ausgebildete Elektrode eines Elektrolytkondensators oder eines anderen Kondensators angelegt werden. Dadurch, dass das Metallschaumelement in eine beliebige Form gebracht werden kann, sind generell den Variationen kaum Grenzen gesetzt.

Eine Vielzahl von weiteren Kombinationen von hier beschriebenen Merkmalen und von an sich bekannten Kondensator-Konstruktionselementen ist denkbar.

## Patentansprüche

1. Kondensator (1, 20), aufweisend mindestens ein Kondensatorelement (1, 23)
mit mindestens zwei Elektroden (4, 5), welche je über eine Kontaktfläche zum Strom zuführen bzw. wegführen verfügen,
und mit zwischen den Elektroden (4, 5) angeordnetem dielektrischem Material (2, 3),
**dadurch gekennzeichnet,**
**dass** an mindestens einer Kontaktfläche einer Elektrode ein Metallschaumelement (9, 24) aus einem metallischen Schaum anliegt.

2. Kondensator nach Anspruch 1, **gekennzeichnet durch** mehrere in Serie geschaltete, aufeinander gestapelte Kondensatorelemente (23), wobei zwischen in Serie geschalteten Kondensatorelementen (23) ein Metallschaumelement (24) angeordnet ist.

3. Kondensator nach Anspruch 1 oder 2, **dadurch gekennzeichnet, dass** das Kondensatorelement (23) oder mindestens eines der Kondensatorelemente (23) aus mehreren parallel geschalteten Kondensator-Grundelementen (21) zusammengesetzt ist.

4. Kondensator nach einem der vorangehenden Ansprüche, **dadurch gekennzeichnet, dass** durch mindestens eine Elektrode an einer Seite des Kondensatorelementes eine Fläche geformt wird und dass diese Fläche mit einer flammgespritzten Schicht (8, 22) versehen ist, wodurch die Kontaktfläche der Elektrode gebildet wird.

5. Kondensator nach einem der Ansprüche 1 bis 4, **dadurch gekennzeichnet, dass** das dielektrische Material (2, 3) des oder jedes Kondensatorelementes (1, 23) Polymer- oder Papierfolien (2, 3) aufweist und die Elektroden durch leitende Beschichtungen (4, 5) der Polymer- oder Papierfolien (2, 3) oder einer separaten Trägerfolie gebildet wird.

6. Kondensator nach einem der Ansprüche 1 bis 4, **dadurch gekennzeichnet, dass** das dielektrische Material (2, 3) des oder jedes Kondensatorelementes (1, 23) Polymer- oder Papierfolien (2, 3) aufweist und die Elektrode durch eine Metallfolie, bspw. eine Aluminiumfolie gebildet wird.

7. Kondensator nach einem der vorangehenden Ansprüche, **dadurch gekennzeichnet, dass** auf der Kontaktfläche ein den Kontaktwiderstand reduzierendes, leitfähiges Material aufgebracht ist.

8. Kondensator nach einem der vorangehenden Ansprüche, **dadurch gekennzeichnet, dass** an mindestens ein Metallschaumelement (8) ein Stromzurühr- bzw. -abnehmelement (10) angelötet ist.

9. Kondensator nach einem der vorangehenden Ansprüche **dadurch gekennzeichnet, dass**
das oder mindestens ein Kondensatorelement aus dielektrischen Folien (2, 3) und leitenden, durch Beschichtungen (4, 5) oder durch Metallfolien gebildeten Schichten gewickelt ist,
wodurch eine Wicklungsachse definiert wird und sich im Querschnitt senkrecht zu der Wicklungsachse eine Folge von Lagen ergibt, die abwechslungsweise aus elektrisch isolierendem Material und einer als Elektrode dienenden Leiterschicht besteht,
und dass auf zwei Seiten des oder jedes Kondensatorelementes stirnseitig im Wesentlichen senkrecht zu der Wicklungsachse oder in einem Winkel zu dieser eine zu einer Kontaktfläche ausgebildete Oberfläche vorhanden ist,
wobei nur diejenigen der Leiterschichten (4, 5), welche elektrischen Kontakt zur Kontaktfläche haben sollen, bis an die Oberfläche herangeführt sind.

10. Verfahren zur Herstellung eines Kondensators nach einem der vorangehenden Ansprüche, wobei
mindestens ein Kondensatorelement (1, 23) mit mindestens zwei je eine Kontaktfläche aufweisenden Elektroden und mit zwischen den Elektroden angeordnetem dielektrischem Material zur Verfügung gestellt wird,
an mindestens eine Kontaktfläche ein Metallschaumelement (9, 24) aus einem metallischen Schaum angelegt wird,
ein elektrischer Kontakt zwischen der Kontaktfläche und dem Metallschaumelement durch Presskontakt hergestellt wird,
und wobei dieses Metallschaumelement (9, 24) mit einem stromzuführenden bzw. stromabführenden (10) Element oder mit einer Kontaktfläche eines weiteren Kondensatorelementes (23) elektrisch verbunden wird.
